# EUROPÄISCHE PATENTSCHRIFT

(11) **EP 3 558 661 B1**
(45) Veröffentlichungstag und Bekanntmachung des Hinweises auf die Patenterteilung: **25.03.2020**
(21) Anmeldenummer: 19712916.6
(22) Anmeldetag: 12.03.2019
(51) Int. Cl.: B32B 3/26, B32B 5/02, B32B 7/12, B32B 21/10, B32B 21/14

(54) **FORMTEIL UND VERFAHREN ZUM HERSTELLEN EINES SOLCHEN FORMTEILS**
MOULDED ARTICLE AND METHOD FOR MANUFACTURING SUCH A MOULDED ARTICLE
ARTICLE MOULÉ ET PROCÉDÉ DE FABRICATION D'UN TEL ARTICLE MOULÉ

(30) Priorität: 16.03.2018 DE 102018106258
(43) Veröffentlichungstag der Anmeldung: 30.10.2019
(73) Patentinhaber: Novem Car Interior Design GmbH, 95519 Vorbach (DE)
(72) Erfinder: MARTIN, Alexander, 91224 Pommelsbrunn (DE); HAAS, Mario, 95491 Ahorntal (DE)
(74) Vertreter: Schlögl, Markus
(86) Internationale Anmeldenummer: PCT/EP2019/056187
(87) Internationale Veröffentlichungsnummer: WO 2019/175192

(56) Entgegenhaltungen:
- DE-A1-102010 053 578
- DE-A1-102012 110 153

## Beschreibung

Die Erfindung betrifft ein Formteil, insbesondere ein als Formteil ausgebildetes Dekorteil und/oder Verkleidungsteil für einen Fahrzeuginnenraum. Ferner betrifft die Erfindung ein Verfahren zum Herstellen eines solchen Formteils.

Im Fahrzeuginnenraum werden zahlreiche Dekor- und Verkleidungsteile eingebaut, beispielsweise Türverkleidungen, Konsolen- und Instrumentenverblendungen. Zu den Dekor- und Verkleidungsteilen zählen auch Bedientasten bzw. deren Abdeckungen.

Die an derartige Formteile gestellten Anforderungen steigen stets. Insbesondere werden Lichteffekte zur Verdeutlichung des Dekors der Formteile gewünscht, die das Dekor auch bei schlechten oder schwachen Lichtverhältnissen sichtbar machen, um das Formteil und damit den Fahrzeuginnenraum optisch aufzuwerten.

Bei hochwertigen Holzfurnieren als Dekorlage des Formteils besteht insbesondere die Anforderung, die Maserungsstruktur des Holzfurniers auch bei schlechten oder schwachen Lichtverhältnissen erkennbar zu machen.

Ferner wird die Anforderung an solche Formteile gestellt, dass bei guten Lichtverhältnissen keine Veränderung oder Besonderheiten an der Oberfläche des Formteils zu erkennen sind. Für den Betrachter soll in diesem Fall lediglich die herkömmliche Oberfläche des Dekors sichtbar sein.

Zum Stand der Technik wird auf die Druckschrift DE 10 2012 110153 A1 verwiesen.

Der Erfindung liegt daher die Aufgabe zugrunde ein neues Formteil anzugeben, insbesondere ein Formteil, bei dem die Maserungsstruktur des Holzfurniers auch bei schlechten oder schwachen Lichtverhältnissen erkennbar ist. Ferner besteht die Aufgabe der der Erfindung darin, ein Verfahren zum Herstellen eines solchen Formteils anzugeben.

Diese Aufgabe wird hinsichtlich des Formteils gelöst durch die Merkmale des Anspruchs 1 und hinsichtlich des Verfahrens durch Merkmale des Anspruchs 6. Vorteilhafte Ausgestaltungen und Weiterbildungen sind in den jeweils abhängigen Ansprüchen angegeben.

Das erfindungsgemäße Formteil umfasst eine, vorzugsweise zumindest teilweise lichtundurchlässige, Dekorschicht mit einer als Sichtseite ausgebildeten Vorderseite und einer der Vorderseite gegenüberliegenden Rückseite, wobei die Dekorschicht an ihrer Vorderseite eine aus einem Holzfurnier gebildete Dekorlage umfasst, wobei an der Vorderseite der Dekorlage eine Maserungsstruktur des Holzfurniers sichtbar ist, wobei die Maserungsstruktur helle Bereiche und dunkle Bereiche aufweist.

In der Dekorschicht ist eine Vielzahl von Lichtdurchlässen zur Lichtweiterleitung von der Rückseite der Dekorschicht zu der als Sichtseite ausgebildeten Vorderseite der Dekorschicht vorgesehen, wobei sich die Lichtdurchlässe durch die Dekorschicht hindurch erstrecken.

Das Formteil umfasst ferner einen transparenten oder transluzenten Träger, wobei der Träger an der Rückseite der Dekorschicht vorgesehen ist.

Des Weiteren umfasst das Formteil ein Lichtelement umfassend eine Lichtquelle, wobei das Lichtelement zur Durchleuchtung der Lichtdurchlässe vorgesehen ist, und wobei das Lichtelement an einer Rückseite des Trägers vorgesehen ist.

Das erfindungsgemäße Formteil ist dadurch gekennzeichnet, dass die Lichtdurchlässe zur Nachbildung der Maserungsstruktur des Holzfurniers an der Vorderseite der Dekorlage derart angeordnet sind, dass die Dichte der Lichtdurchlässe in der Dekorschicht abhängig von der Maserungsstruktur an der Vorderseite des Holzfurniers ist, derart, dass in den dunklen Bereichen der Maserungsstruktur eine höhere Dichte oder eine geringere Dichte an Lichtdurchlässen vorgesehen ist als in den hellen Bereichen der Maserungsstruktur.

Als Dichte der Lichtdurchlässe wird insbesondere die Verteilungsdichte der Lichtdurchlässe in Draufsicht auf die Vorderseite der Dekorlage verstanden.

Die dunklen Bereiche und/oder die hellen Bereiche sind insbesondere durch die Maserungsstruktur, vorzugsweise die unterschiedlichen Farben oder Farbintensitäten der Maserungsstruktur, vorgegeben oder bedingt. Dunkele und helle Bereiche können jeweils in ihrer Gruppe ebenfalls unterschiedliche Farbintensitäten aufweisen. Insbesondere wechseln sich dunkle und helle Bereiche zumindest abschnittsweise ab.

Es kann auch vorgesehen sein, dass lediglich ein Teil der Maserungsstruktur helle und dunkle Bereiche aufweist.

Helle Bereiche der Maserungsstruktur können durch eine höhere Dichte an Lichtdurchlässen heller dargestellt werden als die dunklen Bereiche der Maserungsstruktur.

Möglich ist auch, dass die Maserungsstruktur invers nachgebildet ist, indem die dunklen Bereiche der Maserungsstruktur durch eine höhere Dichte an Lichtdurchlässen, im Funktionsfall, d.h. bei eingeschalteter Lichtquelle, heller dargestellt werden als die - eigentlich - hellen Bereiche der Maserungsstruktur.

Die Lichtdurchlässe weisen vorzugsweise einen derart geringen Durchmesser auf, dass sie in einem Nichtfunktionsfall, d.h. bei ausgeschalteter Lichtquelle, für einen Betrachter nicht oder nur schwer zu erkennen sind.

Der wesentliche Vorteil der Erfindung besteht insbesondere darin, dass bei eingeschalteter Lichtquelle die Maserungsstruktur des Holzfurniers auch bei schlechten oder schwachen Lichtverhältnissen erkennbar oder zumindest teilweise nachgebildet ist, wohingegen bei ausgeschalteter keine Auffälligkeiten der Oberfläche des Formteils zu erkennen sind.

Es kann vorgesehen sein, dass in den hellen Bereichen eine vorgegebene Dichte an Lichtdurchlässen vorgesehen ist, wohingegen in den dunklen Bereichen keine Lichtdurchlässe vorgesehen sind.

Alternativ kann vorgesehen sein, dass in den dunklen Bereichen eine vorgegebene Dichte an Lichtdurchlässen vorgesehen ist, wohingegen in den hellen Bereichen keine Lichtdurchlässe vorgesehen sind.

Gemäß einer Ausführungsvariante der Erfindung sind die Lichtdurchlässe in den Bereichen mit höherer Dichte und/oder in den Bereichen mit geringer Dichte an Lichtdurchlässen jeweils in Randabschnitten oder überwiegend in den Randabschnitten dieser Bereiche vorgesehen.

Eine Weiterbildung der Erfindung sieht vor, dass mehrere dunkle Bereiche und/oder mehrere helle Bereiche der Maserungsstruktur eine jeweils unterschiedliche Dichte an Lichtdurchlässen aufweisen.

Eine bevorzugte Ausführungsvariante der Erfindung sieht vor, dass die Dekorschicht eine mittels einer Klebeschicht an der Rückseite der Dekorlage angebrachte, insbesondere angeklebte, Vlies- oder Gewebeschicht umfasst.

Bevorzugt ist oder umfasst das Lichtelement ein flächiges Leuchtmittel. Vorzugsweise erstreckt sich das Lichtelement über die gesamte Rückseite des Trägers. Auch kann vorgesehen sein, dass das Lichtelement insbesondere im Bereich der Lichtdurchlässe an der Rückseite des Trägers vorgesehen ist.

An der Vorderseite der Dekorschicht kann eine Schutz- und/oder Optikschicht vorgesehen sein, wobei die Schutz- und/oder Optikschicht vorzugsweise eine Lackschicht umfasst oder aus einer Lackschicht gebildet ist. Die Schutz- und/oder Optikschicht kann aufgespritzt oder aufgegossen werden.

Das erfindungsgemäße Verfahren zum Herstellen eines erfindungsgemäßen Formteils umfasst die Schritte:
- Bereitstellen eines zur Bildung der Dekorlage vorgesehenen Holzfurniers;
- Detektieren der Maserungsstruktur des Holzfurniers, insbesondere von der Vorderseite der Dekorlage aus;
- Bestimmen von dunklen Bereichen und hellen Bereichen der Maserungsstruktur;
- Einbringen von Lichtdurchlässen in die Dekorschicht, insbesondere durch Lasern, wobei die Lichtdurchlässe zur Nachbildung der Maserungsstruktur des Holzfurniers an der Vorderseite der Dekorlage derart angeordnet werden, dass die Dichte der Lichtdurchlässe in der Dekorschicht abhängig von der Maserungsstruktur an der Vorderseite des Holzfurniers ist, derart dass in den dunklen Bereichen der Maserungsstruktur eine höhere Dichte oder eine geringere Dichte an Lichtdurchlässen vorgesehen wird als in den hellen Bereichen der Maserungsstruktur;
- Hinterspritzen der Dekorschicht mit einem transparenten oder transluzenten Trägermaterial zur Bildung des Trägers;
- Aushärten des Trägermaterials;
- Vorsehen des Lichtelements an der Rückseite des Trägers.

Der Verfahrensschritt "Bestimmen von dunklen Bereichen und hellen Bereichen" kann im Sinne von Festlegen und/oder Erkennen der dunklen oder hellen Bereiche verstanden werden.

Gemäß einer Weiterbildung des Verfahrens ist vorgesehen, dass in den hellen Bereichen eine vorgegebene Dichte an Lichtdurchlässen vorgesehen, insbesondere eingebracht, wird, wohingegen in den dunklen Bereichen keine Lichtdurchlässe vorgesehen, insbesondere eingebracht, werden.

Alternativ kann vorgesehen sein, dass in den dunklen Bereichen eine vorgegebene Dichte an Lichtdurchlässen vorgesehen, insbesondere eingebracht, wird, wohingegen in den hellen Bereichen keine Lichtdurchlässe vorgesehen, insbesondere eingebracht, werden.

Gemäß einer Ausführungsvariante werden die Lichtdurchlässe in den Bereichen mit höherer Dichte und/oder in den Bereichen mit geringer Dichte an Lichtdurchlässen in Randabschnitten oder überwiegend in den Randabschnitten dieser Bereiche vorgesehen, insbesondere eingebracht.

Es kann vorgesehen sein, dass eine jeweils unterschiedliche Dichte an Lichtdurchlässen in den dunklen Bereichen und/oder den hellen Bereichen vorgesehen, insbesondere eingebracht, wird.

Ferner kann vorgesehen sein, dass nach dem Bereitstellen der Dekorlage mittels einer Klebeschicht eine Vlies- oder Gewebeschicht an der Rückseite der Dekorlage angebracht, insbesondere angeklebt, wird.

Die Erfindung wird nachstehend auch hinsichtlich weiterer Merkmale und Vorteile anhand der Beschreibung vom Ausführungsbeispielen und unter Bezugnahme auf die beiliegenden, schematischen Zeichnungen näher erläutert. Dabei zeigen
- FIG 1: in einer schematischen Querschnittsdarstellung einen vergrößerten Ausschnitt eines weiteren Ausführungsbeispiels eines erfindungsgemäßen Formteils,
- FIG. 2: in einer schematischen Darstellung eine Draufsicht auf einen Ausschnitt der Vorderseite des Holzfurniers eines Ausführungsbeispiels eines erfindungsgemäßen Formteils.

Einander entsprechende Teile und Komponenten auch über die verschiedenen Ausführungsbeispiele hinweg sind jeweils mit den gleichen Bezugszeichen bezeichnet.

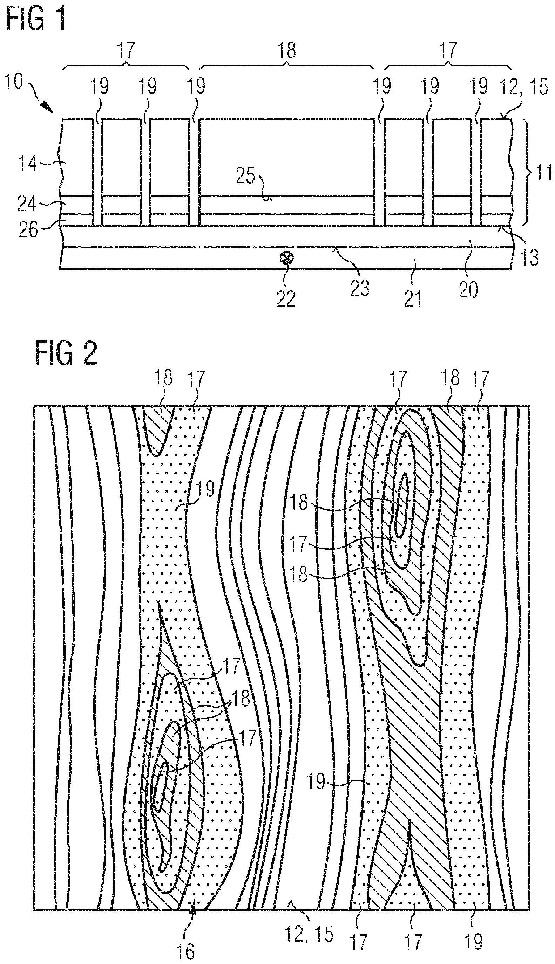

FIG. 1 zeigt ein Formteil 10, umfassend eine zumindest teilweise lichtundurchlässige Dekorschicht 11 mit einer als Sichtseite ausgebildeten Vorderseite 12 und einer der Vorderseite 12 gegenüberliegenden Rückseite 13.

Die Dekorschicht 11 umfasst an ihrer Vorderseite 12 eine aus einem Holzfurnier gebildete Dekorlage 14, wobei an der Vorderseite 15 der Dekorlage 14 eine Maserungsstruktur 16 des Holzfurniers sichtbar ist, wobei die Maserungsstruktur 16 helle Bereiche 17 und dunkle Bereiche 18 aufweist. Die Maserungsstruktur 16 sowie die hellen Bereichen 17 und die dunklen Bereiche 18 sind insbesondere in FIG. 2 ersichtlich.

In der Dekorschicht 11 ist eine Vielzahl von Lichtdurchlässen 19 zur Lichtweiterleitung von der Rückseite 13 der Dekorschicht 11 zu der als Sichtseite ausgebildeten Vorderseite 12 der Dekorschicht 11 vorgesehen, wobei sich die Lichtdurchlässe 19, wie FIG. 1 zeigt, durch die Dekorschicht 11 hindurch erstrecken.

Das Formteil 10 umfasst ferner einen transparenten oder transluzenten Träger 20, wobei der Träger 20 an der Rückseite 13 der Dekorschicht 11 angespritzt ist.

Ferner umfasst das Formteil 10 ein Lichtelement 21 umfassend eine Lichtquelle 22, wobei das Lichtelement 21 zur Durchleuchtung der Lichtdurchlässe 19 vorgesehen ist, und wobei das Lichtelement 19 an einer Rückseite 23 des Trägers 20 vorgesehen ist.

Die Lichtdurchlässe 19 sind zur Nachbildung der Maserungsstruktur 16, wie beispielhaft in FIG. 2 dargestellt, des Holzfurniers an der Vorderseite 15 der Dekorlage 14 derart angeordnet, dass die Dichte der Lichtdurchlässe 19 in der Dekorschicht 11 abhängig von der Maserungsstruktur 16 an der Vorderseite 15 des Holzfurniers ist, derart dass in den dunklen Bereichen 18 der Maserungsstruktur 16 eine geringere Dichte an Lichtdurchlässen 19 vorgesehen ist als in den hellen Bereichen 17 der Maserungsstruktur 16.

Gemäß den Ausführungsbeispielen nach FIG. 1 und FIG. 2 ist in den hellen Bereichen 17 ist eine vorgegebene Dichte an Lichtdurchlässen 19 vorgesehen, wohingegen in den dunklen Bereichen 18 keine Lichtdurchlässe 19 vorgesehen sind.

Die hellen Bereiche 17 der Maserungsstruktur 16 gemäß dem Ausführungsbeispiel nach FIG. 2 weisen eine jeweils unterschiedliche Dichte an Lichtdurchlässen 19 auf.

Die Dekorschicht 11 umfasst neben der Dekorlage 14 eine mittels einer Klebeschicht 24 an der Rückseite 25 der Dekorlage 14 angeklebte Vliesschicht 26.

Nachfolgend wird ein Verfahren zum Herstellen des erfindungsgemäßen Formteils 10 gemäß dem Ausführungsbeispiel nach FIG. 1 angegeben. Dieses Verfahren umfasst die Schritte:
- Bereitstellen eines zur Bildung der Dekorlage 14 vorgesehenen Holzfurniers;
- Ankleben einer Vliesschicht 26 mittels einer Klebeschicht 24 an die Rückseite 23 der Dekorlage 14;
- Detektieren der Maserungsstruktur 16 des Holzfurniers von der Vorderseite 15 der Dekorlage 14 aus;
- Bestimmen von dunklen Bereichen 18 und hellen Bereichen 17 der Maserungsstruktur 16;
- Einbringen von Lichtdurchlässen 19 in die Dekorschicht 11 durch Lasern, wobei die Lichtdurchlässe 19 zur Nachbildung der Maserungsstruktur 16 des Holzfurniers an der Vorderseite 15 der Dekorlage 14 derart angeordnet werden, dass die Dichte der Lichtdurchlässe 19 in der Dekorschicht 11 abhängig von der Maserungsstruktur 16 an der Vorderseite 15 des Holzfurniers ist, derart dass in den dunklen Bereichen 18 der Maserungsstruktur eine geringere Dichte an Lichtdurchlässen 19 vorgesehen wird als in den hellen Bereichen 17 der Maserungsstruktur 16;
- Hinterspritzen der Dekorschicht 11 mit einem transparenten oder transluzenten Trägermaterial zur Bildung des Trägers 20;
- Aushärten des Trägermaterials;
- Vorsehen des Lichtelements 21 an der Rückseite 23 des Trägers 20.

In den hellen Bereichen 17 wird eine vorgegebene Dichte an Lichtdurchlässen 19 eingebracht, wohingegen in den dunklen Bereichen 18 keine Lichtdurchlässe 19 vorgesehen werden.

Es sind mehrere dunkle Bereiche 18 und mehrere helle Bereiche 17 der Maserungsstruktur 16 vorgesehen, wobei eine jeweils unterschiedliche Dichte an Lichtdurchlässen 19 in die verschiedenen hellen Bereichen 17 eingebracht wird.

### Bezugszeichenliste

- 10: Formteil
- 11: Dekorschicht
- 12: Vorderseite
- 13: Rückseite
- 14: Dekorlage
- 15: Vorderseite
- 16: Maserungsstruktur
- 17: helle Bereiche
- 18: dunkle Bereiche
- 19: Lichtdurchlässe
- 20: Träger
- 21: Lichtelement
- 22: Lichtquelle
- 23: Rückseite
- 24: Klebeschicht
- 25: Rückseite
- 26: Vlies- oder Gewebeschicht

## Patentansprüche

1. Formteil (10), umfassend
eine Dekorschicht (11) mit einer als Sichtseite ausgebildeten Vorderseite (12) und einer der Vorderseite (12) gegenüberliegenden Rückseite (13),
wobei die Dekorschicht (11) an ihrer Vorderseite (12) eine aus einem Holzfurnier gebildete Dekorlage (14) umfasst, wobei an der Vorderseite (15) der Dekorlage (14) eine Maserungsstruktur (16) des Holzfurniers sichtbar ist, wobei die Maserungsstruktur (16) helle Bereiche (17) und dunkle Bereiche (18) aufweist,
wobei in der Dekorschicht (11) eine Vielzahl von Lichtdurchlässen (19) zur Lichtweiterleitung von der Rückseite (13) der Dekorschicht (11) zu der als Sichtseite ausgebildeten Vorderseite (12) der Dekorschicht (11) vorgesehen ist, wobei sich die Lichtdurchlässe (19) durch die Dekorschicht (11) hindurch erstrecken,
einen transparenten oder transluzenten Träger (20), wobei der Träger (20) an der Rückseite (13) der Dekorschicht (11) vorgesehen ist,
ein Lichtelement (21) umfassend wenigstens eine Lichtquelle (22), wobei das Lichtelement (21) zur Durchleuchtung der Lichtdurchlässe (19) vorgesehen ist, und wobei das Lichtelement (19) an einer Rückseite (23) des Trägers (20) vorgesehen ist,
**dadurch gekennzeichnet, dass**
die Lichtdurchlässe (19) zur Nachbildung der Maserungsstruktur des Holzfurniers an der Vorderseite (15) der Dekorlage (14) derart angeordnet sind, dass die Dichte der Lichtdurchlässe (19) in der Dekorschicht (11) abhängig von der Maserungsstruktur (16) an der Vorderseite (15) des Holzfurniers ist, derart dass in den dunklen Bereichen (18) der Maserungsstruktur (16) eine höhere Dichte oder eine geringere Dichte an Lichtdurchlässen (19) vorgesehen ist als in den hellen Bereichen (17) der Maserungsstruktur (16).

2. Formteil nach Anspruch 1,
**dadurch gekennzeichnet, dass**
in den hellen Bereichen (17) eine vorgegebene Dichte an Lichtdurchlässen (19) vorgesehen ist, wohingegen in den dunklen Bereichen (18) keine Lichtdurchlässe vorgesehen sind, oder
in den dunklen Bereichen (18) eine vorgegebene Dichte an Lichtdurchlässen (19) vorgesehen ist, wohingegen in den hellen Bereichen (17) keine Lichtdurchlässe (19) vorgesehen sind.

3. Formteil nach Anspruch 1 oder 2,
**dadurch gekennzeichnet, dass**
die Lichtdurchlässe (19) in den Bereichen mit höherer Dichte und/oder in den Bereichen mit geringer Dichte an Lichtdurchlässen (19) jeweils in Randabschnitten dieser Bereiche oder überwiegend in den Randabschnitten vorgesehen sind.

4. Formteil nach einem der vorhergehenden Ansprüche,
**dadurch gekennzeichnet, dass**
mehrere dunkle Bereiche (18) und/oder mehrere helle Bereiche (17) der Maserungsstruktur (16) eine jeweils unterschiedliche Dichte an Lichtdurchlässen (19) aufweisen.

5. Formteil nach einem der vorhergehenden Ansprüche,
**dadurch gekennzeichnet, dass**
die Dekorschicht (11) eine mittels einer Klebeschicht (24) an der Rückseite (25) der Dekorlage (14) angebrachte Vlies- oder Gewebeschicht (26) umfasst.

6. Verfahren zum Herstellen eines Formteils (10) nach einem der vorhergehenden Ansprüche, umfassend die Schritte:
- Bereitstellen eines zur Bildung der Dekorlage (14) vorgesehenen Holzfurniers;
- Detektieren der Maserungsstruktur (16) des Holzfurniers;
- Bestimmen von dunklen Bereichen (18) und hellen Bereichen (17) der Maserungsstruktur (16);
- Einbringen von Lichtdurchlässen (19) in die Dekorschicht (11), wobei die Lichtdurchlässe (19) zur Nachbildung der Maserungsstruktur (16) des Holzfurniers an der Vorderseite (15) der Dekorlage (14) derart angeordnet werden, dass die Dichte der Lichtdurchlässe (19) in der Dekorschicht (11) abhängig von der Maserungsstruktur (16) an der Vorderseite (15) des Holzfurniers ist, derart dass in den dunklen Bereichen (18) der Maserungsstruktur eine höhere Dichte oder eine geringere Dichte an Lichtdurchlässen (19) vorgesehen wird als in den hellen Bereichen (17) der Maserungsstruktur (16);
- Hinterspritzen der Dekorschicht (11) mit einem transparenten oder transluzenten Trägermaterial zur Bildung des Trägers (20);
- Aushärten des Trägermaterials;
- Vorsehen des Lichtelements (21) an der Rückseite (23) des Trägers (20).

7. Verfahren nach Anspruch 6,
**dadurch gekennzeichnet, dass**
in den hellen Bereichen (17) eine vorgegebene Dichte an Lichtdurchlässen (19) vorgesehen wird, wohingegen in den dunklen Bereichen (18) keine Lichtdurchlässe (19) vorgesehen werden, oder
in den dunklen Bereichen (18) eine vorgegebene Dichte an Lichtdurchlässen (19) vorgesehen wird, wohingegen in den hellen Bereichen (17) keine Lichtdurchlässe (19) vorgesehen werden.

8. Verfahren nach Anspruch 6 oder 7,
**dadurch gekennzeichnet, dass**
die Lichtdurchlässe (19) in den Bereichen mit höherer Dichte und/oder in den Bereichen mit geringer Dichte an Lichtdurchlässen (19) in Randabschnitten oder überwiegend in den Randabschnitten dieser Bereiche vorgesehen werden.

9. Verfahren nach einem der Ansprüche 6 bis 8,
**dadurch gekennzeichnet, dass**
eine jeweils unterschiedliche Dichte an Lichtdurchlässen (19) in den dunklen Bereichen (18) und/oder den hellen Bereichen (17) vorgesehen wird.

10. Verfahren nach einem der Ansprüche 6 bis 9,
**dadurch gekennzeichnet, dass**
nach dem Bereitstellen der Dekorlage (14) mittels einer Klebeschicht (24) eine Vlies- oder Gewebeschicht (26) an der Rückseite (25) der Dekorlage (14) angebracht wird.

## Claims

1. A molded part (10), comprising
a decorative layer (11) having a front side (12) designed as a visible layer and a back side (13) opposite the front side (12),
wherein the decorative layer (11) comprises on its front side (12) a decorative layer (14) formed from a wood veneer, wherein a grain structure (16) of the wood veneer is visible on the front side (15) of the decorative layer (14), wherein the grain structure (16) has light regions (17) and dark regions (18),
wherein a plurality of light passages (19) for conducting light from the back side (13) of the decorative layer (11) to the front side (12) of the decorative layer (11), which is designed as the visible side, is provided in the decorative layer (11), wherein the light passages (19) extend through the decorative layer (11),
a transparent or translucent substrate (20), wherein the substrate (20) is provided on the back side (13) of the decorative layer (11),
a light element (21) comprising at least one light source (22), wherein the light element (21) is provided for illuminating the light passages (19), and wherein the light element (19) is provided on the back side (23) of the substrate (20),
**characterized in that**
the light passages (19) for simulating the grain structure of the wood veneer are arranged on the front side (15) of the decorative layer (14) in such a way that the density of the light passages (19) in the decorative layer (11) depends on the grain structure (16) on the front side (15) of the wood veneer, a higher density of light passages (19) or a lower density thereof being provided in the dark regions (18) of the grain structure (16) than in the light regions (17) of the grain structure (16).

2. The molded part according to claim 1,
**characterized in that**
a predetermined density of light passages (19) is provided in the light regions (17), whereas no light passages are provided in the dark regions (18), or
a predetermined density of light passages (19) is provided in the dark regions (18), whereas no light passages (19) are provided in the light regions (17).

3. The molded part according to claim 1 or 2,
**characterized in that**
the light passages (19) in the regions having a higher density and/or in the regions having a lower density of light passages (19) are each provided in boundary sections of these regions or primarily in the boundary sections.

4. The molded part according to any one of the preceding claims,
**characterized in that**
a plurality of dark regions (18) and/or a plurality of light regions (17) of the grain structure (16) has/have different densities of light passages (19).

5. The molded part according to any one of the preceding claims,
**characterized in that**
the decorative layer (11) comprises a woven or nonwoven layer (26), which is applied to the back side (25) of the decorative layer (14) by means of an adhesive layer (24).

6. The method for manufacturing a molded part (10) according to any one of the preceding claims, comprising the steps:
- preparing a wood veneer that is provided to form the decorative layer (14);
- detecting the grain structure (16) of the wood veneer;
- determining the dark regions (18) and the light regions (17) of the grain structure (16);
- inserting light passages (19) into the decorative layer (11), wherein the light passages (19) for simulating the grain structure (16) of the wood veneer are arranged on the front side (15) of the decorative layer (14) in such a way that the density of the light passages (19) in the decorative layer (11) is a function of the grain structure (16) on the front side (15) of the wood veneer, a higher density of light passages (19) or a lower density thereof being provided in the dark regions (18) of the grain structure than in the light regions (17) of the grain structure (16);
- in-mold lamination of the decorative layer (11) using a transparent or translucent backing material to form the substrate (20);
- curing the substrate material;
- providing the light element (21) on the back side (23) of the substrate (20).

7. The method according to claim 6,
**characterized in that**
a predetermined density of light passages (19) is provided in the light regions (17), whereas no light passages (19) are provided in the dark regions (18), or
a predetermined density of light passages (19) is provided in the dark regions (18), whereas no light passages (19) are provided in the light regions (17).

8. The method according to claim 6 or 7,
**characterized in that**
the light passages (19) are provided in the regions of a higher density of light passages (19) and/or in the regions of a lower density thereof in boundary sections or primarily in the boundary sections of these regions.

9. The method according to any one of claims 6 to 8,
**characterized in that**
a different density of light passages (19) is provided in the dark regions (18) and/or in the light regions (17), respectively.

10. The method according to any one of claims 6 to 9,
**characterized in that**
after the decorative layer (14) has been prepared by means of an adhesive layer (24), a woven or nonwoven layer (26) is applied to the back side (25) of the decorative layer (14).

## Revendications

1. Pièce moulée (10), comprenant
une couche décorative (11) avec une face avant (12), réalisée comme face d'aspect, et une face arrière (13) opposée à la face avant (12), dans laquelle la couche décorative (11) comprend sur sa face avant (12) une feuille décorative (14) formée à partir d'un placage de bois, dans laquelle, sur la face avant (15) de la feuille décorative (14), une structure de grain (16) du placage de bois est visible, la structure de grain (16) présentant des zones claires (17) et zones sombres (18),
dans laquelle, dans la couche décorative (11), une pluralité de canaux de lumière (19) est prévue pour laisser passer la lumière de la face arrière (13) de la couche décorative (11) à la face avant (12), réalisée comme face d'aspect, de la couche décorative (11), les canaux de lumière (19) s'étendant à travers la couche décorative (11),
un support (20) transparent ou translucide, le support (20) étant prévu sur la face arrière (13) de la couche décorative (11),
un élément lumineux (21) comprenant au moins une source de lumière (22), l'élément lumineux (21) étant prévu pour transilluminer les canaux de lumière (19), et l'élément lumineux (19) étant prévu sur une face arrière (23) du support (20),
**caractérisée en ce que** les canaux de lumière (19) pour imiter la structure de grain du placage de bois sont disposés sur la face avant (15) de la feuille décorative (14) de telle sorte que la densité des canaux de lumière (19) dans la couche décorative (11) dépend de la structure de grain (16) sur la face avant (15) du placage de bois, de sorte que dans les zones sombres (18) de la structure de grain (16), une plus haute densité ou une plus faible densité de canaux de lumière (19) est prévue que dans les zones claires (17) de la structure de grain (16).

2. Pièce moulée selon la revendication 1, **caractérisée en ce que** dans les zones claires (17), une densité spécifiée de canaux de lumière (19) est prévue, tandis que dans les zones sombres (18), aucun canal de lumière n'est prévu, ou
dans les zones sombres (18), une densité spécifiée de canaux de lumière (19) est prévue, tandis que dans les zones claires (17), aucun canal de lumière (19) n'est prévu.

3. Pièce moulée selon la revendication 1 ou 2, **caractérisée en ce que** les canaux de lumière (19) dans les zones de densité supérieure et/ou dans les zones de densité inférieure de canaux de lumière (19) sont prévus respectivement dans des parties marginales de ces zones ou surtout dans les parties marginales.

4. Pièce moulée selon l'une quelconque des revendications précédentes, **caractérisée en ce que** plusieurs zones sombres (18) et/ou plusieurs zones claires (17) de la structure de grain (16) présentent respectivement une densité de canaux de lumière (19) différente.

5. Pièce moulée selon l'une quelconque des revendications précédentes, **caractérisée en ce que** la couche décorative (11) comprend une couche de non tissé ou de tissu, appliquée sur la face arrière (25) de la feuille décorative (14) au moyen d'une couche adhésive (24).

6. Procédé de fabrication d'une pièce moulée (10) selon l'une quelconque des revendications précédentes, comprenant les étapes consistant à :
- fournir un placage de bois prévu pour former la feuille décorative (14) ;
- détecter la structure de grain (16) du placage de bois ;
- déterminer des zones sombres (18) et des zones claires (17) de la structure de grain (16);
- pratiquer des canaux de lumière (19) dans la couche décorative (11), les canaux de lumière (19) pour imiter la structure de grain du placage de bois étant disposés sur la face avant (15) de la feuille décorative (14) de telle sorte que la densité des canaux de lumière (19) dans la couche décorative (11) dépend de la structure de grain (16) sur la face avant (15) du placage de bois, de sorte que dans les zones sombres (18) de la structure de grain, une densité supérieure ou une densité inférieure de canaux de lumière (19) est prévue que dans les zones claires (17) de la structure de grain (16) ;
- contre-injecter la couche décorative (11) avec un matériau de support transparent ou translucide pour former le support (20) ;
- laisser durcir le matériau de support ;
- prévoir l'élément lumineux (21) sur la face arrière (23) du support (20).

7. Procédé selon la revendication 6, **caractérisé en ce que**
dans les zones claires (17) une densité spécifiée de canaux de lumière (19) est prévue, tandis que dans les zones sombres (18) aucun canal de lumière (19) n'est prévu, ou
dans les zones sombres (18) une densité spécifiée de canaux de lumière (19) est prévue, tandis que dans les zones claires (17) aucun canal de lumière (19) n'est prévu.

8. Procédé selon la revendication 6 ou 7, **caractérisé en ce que** les canaux de lumière (19) dans les zones de densité supérieure et/ou dans les zones de densité inférieure de canaux de lumière (19) sont prévus dans des parties marginales ou surtout dans les parties marginales.

9. Procédé selon l'une quelconque des revendications 6 à 8, **caractérisé en ce qu'**une densité de canaux de lumière (19) différente est prévue dans les zones sombres (18) et/ou les zones claires (17), respectivement.

10. Procédé selon l'une quelconque des revendications 6 à 9, **caractérisé en ce qu'**après la fourniture de la feuille décorative (14), une couche de non-tissé ou de tissu (26) est appliquée à la face arrière (25) de la feuille décorative (14) au moyen d'une couche adhésive (24).
